# EUROPEAN PATENT APPLICATION

(11) **EP 1 850 344 A1**
(43) Date of publication of application: **31.10.2007**
(21) Application number: 06255321.9
(22) Date of filing: 16.10.2006
(51) Int. Cl.: G11B 27/034

(54) **Image display device and method for editing a program**

(30) Priority: 24.04.2006 KR 20060036839
(71) Applicant: LG Electronics Inc., Yongdungpo-gu Seoul (KR)
(72) Inventor: Kim, Ju Seon, Dalseo-gu, Daegu (KR)
(74) Representative: Howson, Richard G.B.

(57) **Abstract**

An image display device is provided. A receiver receives a program, and a storage unit stores the received program. A signal processor processes the stored program so that the program is displayed. An interface unit is used to receive a control command. A controller performs a control operation such that a first mode for editing a selected portion of a displayed program is performed according to a first signal of the interface unit, and a second mode for displaying an edited program is performed according to a second signal of the interface unit during the performing of the first mode.

## Description

The present invention relates to an image display device and a method for editing a program an image display device.

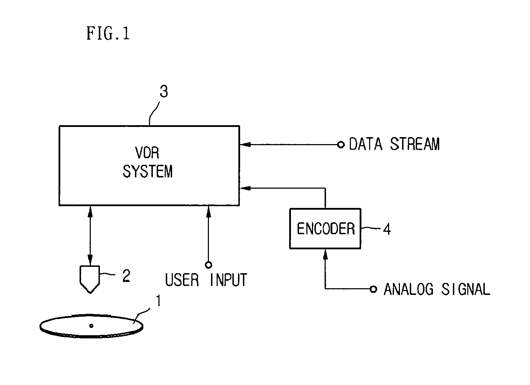

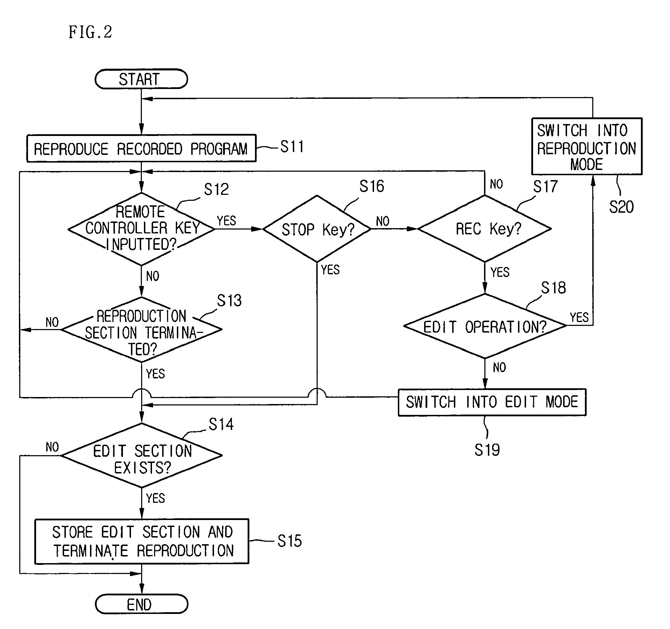

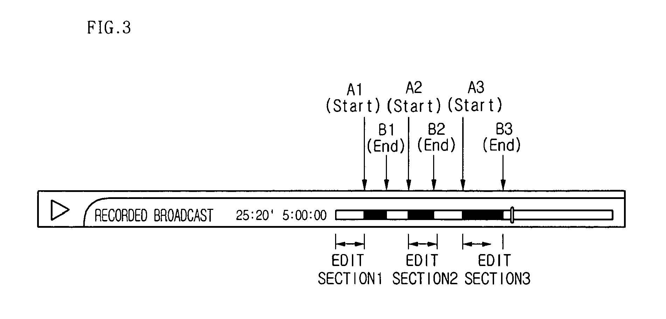

Fig. 1 is a schematic block diagram of an image editing device for an image display device according to the related art. Fig. 2 is a flowchart illustrating a method for editing an image in an image display device according to the related art. Fig. 3 is a diagram illustrating an example of a procedure for editing an image in an image display device according to the related art.

An image display device includes a video disc recorder (VDR) for recording an image signal on, or reproducing an image signal from, a recording medium such as BD-RW.

With reference to Figure 1, an optical recording/reproducing device of the video disc recorder includes: an optical pickup 2 for reading a recorded signal from a recording medium 1 and recording a processed external data stream in the recording medium 1; a VDR system 3 for converting a readout signal of the optical pickup 2 into a reproducible signal readout signal of the optical pickup 2 into a reproducible signal and converting an external data stream into a recordable data stream; and an encoder 4 for encoding an external analog signal and outputting the encoded signal to the VDR system.

Audio/video (A/V) streams are recorded and stored in the recording medium 1 on a clip basis. For example, a first clip of an A/V stream and a second clip of an A/V stream, each of which is recorded successively one at a time, are managed using a first actual reproduction list and a second actual reproduction list that are automatically created during the recording of the A/V streams.

When a reproduction command is inputted, a corresponding program stored in the recording medium 1 is reproduced. When a program edit command is inputted, a progress bar for indicating a recorded broadcast is displayed at the bottom of a display screen as illustrated in Fig. 3.

At this point, when a pre-assigned REC key of a remoter controller (not illustrated) is pressed by a user, a start A1 of an edit section is set. Thereafter, when the REC key is pressed once again, an end B1 of the edit section is set. As a result, a first edit section, which the user desires to edit, can be extracted.

Similarly, when the REC key is pressed again, another start A2 of an edit section is set. Thereafter, when the REC key is pressed once again, another end B2 of the edit section is set. As a result, a second edit section can be extracted.

That is, the start and end of an edit section can be set by pressing the REC key during the reproduction of a recorded program. In this way, it is possible to sequentially complete a plurality of edit sections.

If the recorded program is reproduced to its end, it is determined that the editing operation is completed. The extracted edit sections are connected using the start and end points of the edit sections, and the connected edit sections can be stored as one program.

A procedure for editing an image in an image display device according to the related art will be described with reference to Fig. 2.

Referring to Fig. 2, it is determined whether a key for reproducing a recorded program is pressed, in operations S11 and S12.

If a key of a corresponding remote controller is not pressed, it is determined whether a reproduction section is terminated, in operation S13.

If the reproduction section is terminated, it is determined whether an edit section exists, in step S14.

If the edit section exists, the edit section is stored and reproduction for recording is terminated, in step S15.

On the other hand, if a key of the corresponding remote controller is pressed, it is determined whether the inputted key is a stop key, in step S16.

If the inputted key is the stop key, the procedure proceeds to step S14; and if not the procedure proceeds to step S17.

In step S17, it is determined whether the inputted key is a REC key.

If the inputted key is the REC key, it is determined whether an edit operation is being performed, in step S18.

If an editing operation is not being performed, a current mode is converted into an edit mode in step S19. Thereafter, the procedure proceeds to step S14.

On the other hand, if an editing operation is being performed, a current mode is converted into a reproduction mode in step S20. Thereafter, the procedure returns to step S11.

In the related art image display device as described above, review of the edited section during the editing operation is performed by selecting a predetermined position in the progress bar screen illustrated in Fig. 3 using the remote controller and then moving a cursor thereto to play back the edited section, or by stopping the editing operation, storing the reproduced program and then reproducing the same again.

Therefore, the edited section cannot be easily reversed during the editing operation. Moreover, the conventional editing function cannot provide a user with an opportunity for changing an edited section. Accordingly, there often occurs a case where the edited section is not quite as desired.

Accordingly, the present invention is directed to an image display device and a program editing method thereof that substantially obviates one or more problems due to limitations and disadvantages of the related art.

An object of the present invention is to provide an image display device that makes it possible to conveniently edit a program therein.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided an image display device including: a receiver for receiving a program; a storage unit for storing the received program; a signal processor for processing the stored program so that the program is displayed; an interface unit for receiving a control command; and a controller for performing a control operation such that a first mode for editing a selected portion of a displayed program is performed according to a first signal of the interface unit, and a second mode for displaying an edited program is performed according to a second signal of the interface unit during the performing of the first mode.

In another aspect of the present invention, there is provided a method for editing a program of an image display device, the method including: performing a first mode for editing a displayed program according to a first signal inputted; and performing a second mode for displaying the program edited in the first mode.

In a further another aspect of the present invention, there is provided an image display device including: a receiver for receiving a program; a storage unit for storing the program; a signal processor for processing the stored program so that the program is displayed; an interface unit for receiving a control command; and a controller performing a control operation such that a received and displayed program is edited, in real time, and stored in the storage unit according to a signal of the interface unit.

A method of operating an image display device to edit an audio/video (A/V) production, the method including the steps of:

(a) the image display device entering an edit mode in which the production is played to a user and in which the production can be edited to select one or more sections thereof in response to one or more edit inputs from the user;

(b) from the edit mode, the image display device entering an edit reproduction mode in which the selected section or sections only can be played to the user.

Step (b) may be carried out in response to receiving a first mode-change input from a user.

The method may include the further step of (d) the image display device returning to the edit mode from the edit reproduction mode. Step (d) may be carried out in response to receiving a second mode-change input from a user.

Step (b) may include a further editing step of editing the selected section or sections to select one or more subsections thereof in response to one or more edit inputs from the user; and the still further step of entering a further edit reproduction mode in which the selected sub-section or subsections only can be played to the user.

The or each input may be provided by a user operating an interface. The interface may be included in a remote control operable to communicate with the display device so as to convey the inputs thereto.

The image display device may comprise a media player. The media player may comprise a recording and reproducing device. The recording and reproducing device may be an optical recording and reproducing device. The image recording device may include means for receiving a broadcast A/V signal. The image display device may comprise visual display means, such as, for example, a television screen.

According to a yet further aspect of this invention, there is provided an image display device arranged and operable to carry out the method of the still further aspect.

"Audio/video" may mean audio and video, or audio, or video.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a schematic block diagram of an image editing device for an image display device according to the

### related art;

Fig. 2 is a flowchart illustrating a method for editing an image in an image display device according to the

### related art;

Fig. 3 is a diagram illustrating an example of a procedure for editing an image in an image display device according to the related art;

Fig. 4 is a block diagram of an image display device according to an embodiment of the present invention;

Fig. 5 is a diagram illustrating a method for editing an image in an image display device according to an embodiment of the present invention; and

Fig. 6 is a flowchart illustrating a method for editing an image in an image display device according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

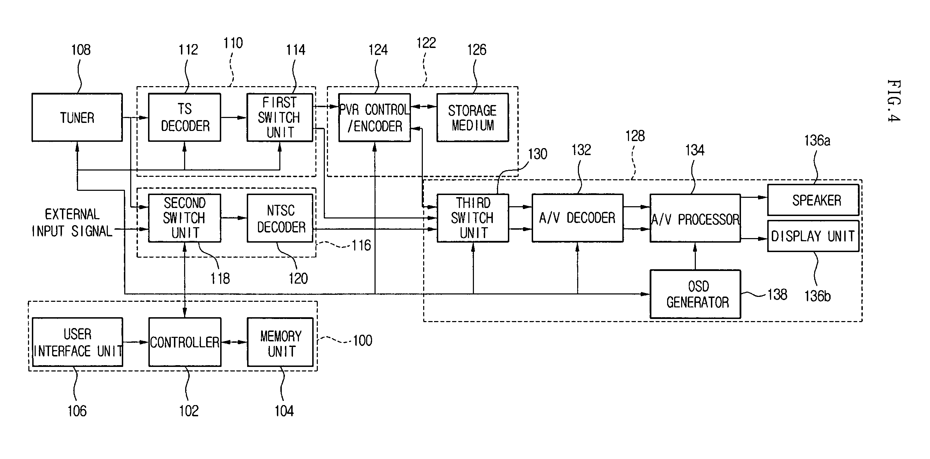

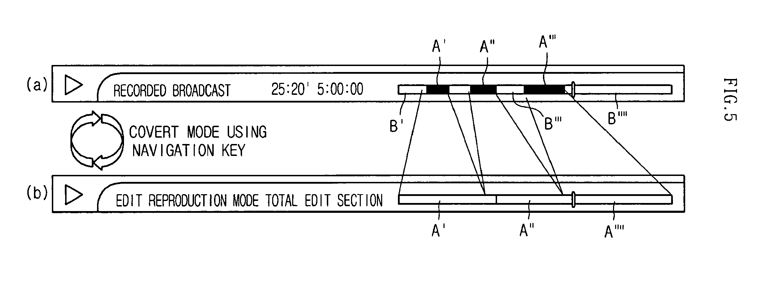

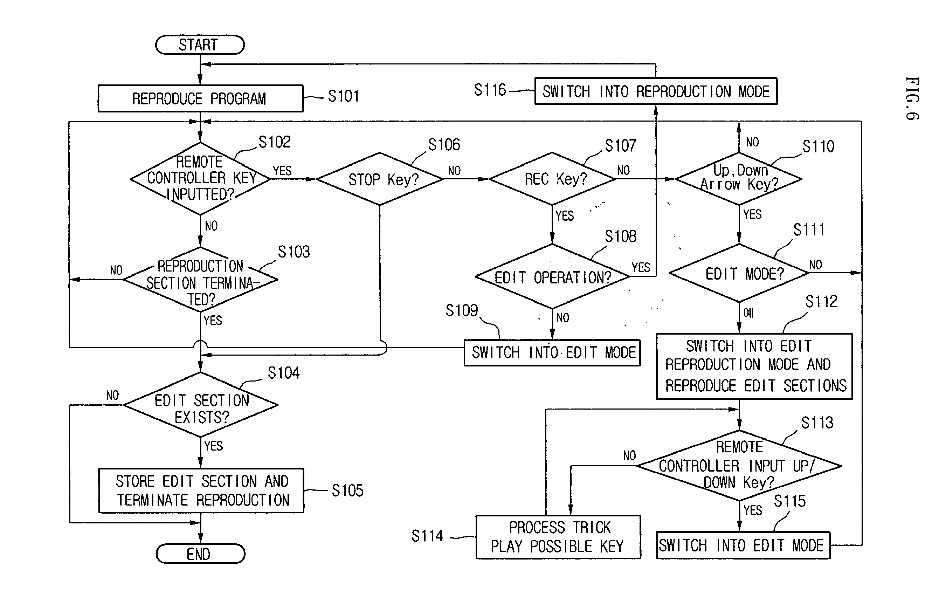

Fig. 4 is a block diagram of an image display device according to an embodiment of the present invention. Fig. 5 is a diagram illustrating a method for editing an image in an image display device according to an embodiment of the present invention. Fig. 6 is a flowchart illustrating a method for editing an image in an image display device according to an embodiment of the present invention.

Referring to Fig. 4, the image display device includes a user command processor 100. Commands for channel selection, recording and reproduction are inputted into the user command processor 100. Under the control of the user command processor 100, in response to user commands, a broadcast program is stored in a storage medium 126, an image stored in storage medium 126 is reproduced and edited, and an edited section is reproduced.

The image display device further includes: a tuner 108 for selecting a desired broadcast signal among broadcast signals received through an antenna; a first signal processor 110 for receiving and processing a digital signal among signals received through the tuner 108 under the control of the user command processor 100; and a second signal processor 120 for processing an external input signal or an analog signal received through the tuner 108.

The image display device further includes: a storage unit 122 for storing images processed by the first and second signal processors 110 and 120 under the control of the user command processor 100; and an A/V signal processor 128 for processing the output signals of the first and second signal processors 110 and 120 and the stored signals of the storage unit 122 into A/V signals.

The user command processor 100 includes: an interface unit 106 for receiving user commands; a controller 102 for performing control operations in such a way that an input image is stored in the storage medium 126 and reproduction and edit of the stored image and reproduction of an edit section are performed in response to commands inputted through the interface unit 106; and a memory unit 104 for storing the recording and reproducing conditions that are set by the user in response to a control signal of the controller 102.

The first signal processor 110 includes: a transport stream (TS) decoder 112 for receiving and decoding a digital signal received through the tuner 108; and a first switch unit 114 for selectively outputting the decoded signal to the storage unit 122 or the A/V signal processor 128 according to a control signal of the controller 102.

The second signal processor 120 includes: a second switch unit 118 for selecting an analog signal received through the tuner 108 or an external input signal received through an external device; and an NTSC decoder 120 for receiving and decoding a signal selected by the second switch unit 118.

The storage unit 122 includes: a PVR control/encoder 124 for receiving and encoding an output signal of the first switch unit 114 or the NTSC decoder 120; and the storage medium 126 for storing a signal encoded by the PVR control/encoder 124.

The A/V signal processor 128 includes: a third switch unit 130 operating to select the output signals of the first switch unit 114, the NTSC decoder 120 and the PVR control/encoder 124 or to provide the output signal of the NTSC decoder 120 to the PVR control/encoder 124; an A/V decoder 132 for decoding an A/V signal selected by the third switch unit 130; an A/V processor 134 for processing the decoded signal into an audio signal and a video signal; a speaker 136a for outputting the audio signal; a display unit 136b for displaying the video signal; and an OSD generator 138 for generating an OSD menu screen for selecting a recording condition and a reproducing condition that are required by a user.

An operation of the image display device will be described below.

When a power-on command is inputted through the user interface 106, the controller 102 performs an image processing operation so that an image received through a selected channel or an external source can be displayed.

That is, when a desired channel is selected by the user, the controller 102 outputs a control signal for selecting the desired channel by the tuner 108, a broadcast signal of the selected channel is divided into A/V signals, and the A/V signals are A/V-processed.

When the broadcast signal of the selected channel is a digital signal, the digital signal is inputted to the first signal processor 110. When the broadcast signal of the selected channel is an analog signal, the analog signal is inputted to the second signal processor 110.

A received broadcast signal is processed through a predetermined signal processing operation and the resulting signal is stored in the storage unit 122. Alternatively, the received broadcast signal is processed by the A/V signal processor 128 and the resulting signals are outputted through the speaker 136a and the display unit 136b.

Likewise, an image received through an external input unit (not illustrated) may also be displayed through the display unit 136b.

There is a case where an image received through the tuner 108 or an external device needs to be stored. In this case, a record command is inputted by the user through the interface unit 106, and the controller 102 performs a control operation so that a corresponding program can be stored in the storage medium 126 according to the user's demand.

There is a case where an image stored in the storage medium 126 needs to be edited. In this case, a reproduction command is inputted through the user interface unit 106, and an image editing operation can be performed while a corresponding image is being viewed.

As illustrated in Fig. 5(a), during the reproduction of a recorded program, the user inputs a record (REC) key through the user interface unit 106, selects a desired portion of the reproduced program, and performs an image editing operation.

Accordingly, desired portions A' and A" of the recorded image can be selected, and the start and end points of a desired edit section can be set using the REC key on the user interface unit 106.

At this point, the desired edit section is stored in the storage medium 126 under the control of the controller 102.

Under the control of the controller 102, a program for an edit section may be stored in the storage medium 126 using a separate file. Alternatively, information about the edit section may be stored in an edit table.

When a program is edited to create a new program, information about an edit section of the new program is also stored in the edit table.

An edit reproduction mode may be performed to reproduce only the edited section. An Up/Down key and an Arrow key may be used to perform conversion between the edit mode and the edit reproduction mode.

A re-edit mode may be performed to re-edit an already-edited section in the edit reproduction mode. A re-edit reproduction mode may be performed to reproduce the re-edited program in the re-edit mode.

When the UP/Down key is inputted through the user interface unit 106 in the edit mode, a current mode is converted into the edit reproduction mode as illustrated in Fig. 5(b).

During the reproduction of the edited image, a trick play function, such as Fast Forward and Fast Backward, may be performed in the edit section regardless of an original record image.

When the start and end points of a desired edit portion are set using the REC key, an image can be edited in the edit reproduction mode.

According to the image display device of the present embodiment, a received program and a stored program can be edited in the edit mode, and the edited program can be reproduced in the edit reproduction mode.

In addition, an edited image can be re-edited in the edit reproduction mode.

Although the embodiment describes that conversion between the edit mode and the edit reproduction mode is performed using the Up/Down key, the present invention is not limited to this. Likewise, although the embodiment describes that selection of the edit section is performed using the REC key, the present invention is not limited to this.

The editing of a program as it is received in the image display device (i.e. a program that has not already been stored in the storage medium 126) is possible only when a recording operation and a display operation are simultaneously performed. The recording operation includes a temporal storage operation where a predetermined amount of program is temporarily stored in the storage medium 126.

A procedure for editing an image in the image display device according to an embodiment of the present invention will now be described in detail with reference to Fig. 6.

Referring to Fig. 6, when a recorded program is reproduced, it is determined whether a key is inputted through the user interface unit (steps S101 and S102).

If the key is not inputted, it is determined whether an edit section is terminated (step S103) .

If the edit section is terminated, the edit section is stored and a reproducing operation is terminated (step S105).

On the other hand, if the key is inputted, it is determined whether the inputted key is a Stop key (step S106).

If the inputted key is not the Stop key, it is determined whether the inputted key is the REC key for editing a recorded image (step S107).

If the inputted key is the REC key, it is determined whether a current mode is an edit mode (step S108). When the REC key is inputted in the edit mode, it corresponds to a command for setting the end of the edit section. When the current mode is not the edit mode, the REC key indicates the start of the edit section. The start and end of the edit section may be allocated to separate keys.

If the current mode is not the edit mode, it is converted into the edit mode (step 109).

On the other hand, if the inputted key is not an edit key, it is determined whether a key (e.g., Up/Down/Arrow keys) for inputting only an edited image is inputted (step S110).

If any one of the Up/Down/Arrow keys is inputted, it is determined whether a current mode is an edit mode, in step S111.

If the current mode is an edit mode, it is converted into an edit reproduction mode (step S112).

Thereafter, it is determined whether the Up/Down key of the user interface unit is inputted in the edit reproduction mode (step S113) .

If another key other than the Up/Down key is inputted, a trick play function such as Fast Backward and Fast Forward is performed; and if the Up/Down key is inputted, the current mode is converted into an edit mode (steps S114 and S115).

If the Up/Down key is inputted but the current mode is not an edit mode, a reproducing operation continues (S111).

As described above, embodiments of the present invention provides the edit reproduction mode for reproducing only the edited image in addition to the edit mode, and conversion between the edit mode and the edit reproduction mode can be easily performed through simple key input.

The present invention has the following advantages.

First, it is possible to edit a desired portion of a recorded program and then display the edited portion separately.

Secondly, conversion between the edit mode and the edit reproduction mode can be performed through the simple key input.

Lastly, the re-editing operation can be easily performed in the edited section and thus the optimal edit state can be achieved, thereby enhancing the convenience of users.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image display device comprising:
a receiver for receiving a program;
a storage unit for storing the received program;
a signal processor for processing the stored program so that the program is displayed;
an interface unit for receiving a control command; and
a controller for controlling such that a first mode for editing a selected portion of a displayed program is performed according to a first signal of the interface unit, and a second mode for displaying an edited program is performed according to a second signal of the interface unit during the performing of the first mode.

2. The image display device according to claim 1, wherein the controller controls such that a third mode for editing a selected portion of a displayed and edited program is performed according to a third signal of the interface unit during the performing of the second mode.

3. The image display device according to claim 1, wherein the program displayed during the first mode is a program that is being received through the receiver.

4. The image display device according to claim 1, wherein the program displayed during the first mode is a program that is stored in the storage unit.

5. The image display device according to claim 1, wherein a progress bar indicating an edited interval of a program is displayed together with the program during the first mode.

6. The image display device according to claim 1, wherein the program edited during the first mode is stored in the storage unit.

7. The image display device according to claim 6, wherein the program displayed during the second mode is the program stored in the storage unit during the first mode.

8. The image display device according to claim 1, further comprising: a display unit for displaying the processed program.

9. A method for editing a program of an image display device, the method comprising:
performing a first mode for editing a displayed program according to a first signal inputted; and
performing a second mode for displaying the program edited in the first mode.

10. The method according to claim 9, further comprising performing a third mode for editing a selected portion of a displayed program which was edited in the first mode.

11. The method according to claim 9, wherein the program displayed during the first mode is a program that is being received from a tuner.

12. The method according to claim 9, wherein the program displayed during the first mode is a stored program.

13. The method according to claim 9, wherein a progress bar indicating an edited interval of a program is displayed together with the program during the first mode.

14. The method according to claim 9, wherein the program edited during the first mode is stored in a storage unit.

15. The method according to claim 14, wherein the program displayed during the second mode is the program stored during the first mode.

16. The method according to claim 9, wherein the program edited during the first mode comprises a non-edited program stored in a storage unit and an edition table having information of editions.

17. The method according to claim 16, wherein the program is displayed according to the edition table..

18. An image display device comprising:
a receiver for receiving a program;
a storage unit for storing the program;
a signal processor for processing the stored program so that the program is displayed;
an interface unit for receiving a control command; and
a controller controlling such that a received and displayed program is edited, in real time, and stored in the storage unit according to a signal of the interface unit.

19. The image display device according to claim 18, wherein the controller controls such that only a selected portion of the program is stored in the storage unit.

20. The image display device according to claim 18, wherein the controller controls such that only an unselected portion of the program is stored in the storage unit.

21. The image display device according to claim 18, wherein the controller continuously displays an edited program stored in the storage unit according to a command for displaying the edited program.

22. The image display device according to claim 18, further comprising: a display unit for displaying the processed program.

23. A method of operating an image display device to edit an audio/video (A/V) production, the method including the steps of:
(a) the image display device entering an edit mode in which the production is played to a user and in which the production can be edited to select one or more sections thereof in response to one or more edit inputs from the user;
(b) from the edit mode, the image display device entering an edit reproduction mode in which the selected section or sections only can be played to the user,
